# EUROPÄISCHE PATENTSCHRIFT

(11) **EP 0 893 588 B1**
(45) Veröffentlichungstag und Bekanntmachung des Hinweises auf die Patenterteilung: **11.12.2002**
(21) Anmeldenummer: 98111216.2
(22) Anmeldetag: 18.06.1998
(51) Int. Cl.: F02B 67/06

(54) **Kettentrieb-Einheit für eine Brennkraftmaschine**
CHAIN DRIVE MODULE FOR AN INTERNAL COMBUSTION ENGINE
Module d'entrainement par chaine pour un moteur à combustion interne

(30) Priorität: 24.07.1997 DE 19731809
(43) Veröffentlichungstag der Anmeldung: 27.01.1999
(73) Patentinhaber: Bayerische Motoren Werke Aktiengesellschaft, 80788 München (DE)
(72) Erfinder: Haberl, Alois, 82287 Jesenwang (DE)

(56) Entgegenhaltungen:
- EP-A- 0 055 162
- EP-A- 0 124 433
- EP-A- 0 823 543
- DE-A- 3 816 864
- PATENT ABSTRACTS OF JAPAN vol. 095, no. 001, 28. Februar 1995 (1995-02-28) & JP 06 299863 A (SUZUKI MOTOR CORP), 25. Oktober 1994 (1994-10-25)

## Beschreibung

Die Erfindung betrifft eine Kettentrieb-Einheit für den Antrieb eines Brennkraftmaschinen-Hilfsaggregates, mit einer Kette, mit zwei zu einer Baueinheit zusammengefaßten Schienen für deren Zugtrum und Leertrum, mit einem der Brennkraftmaschinen-Kurbelwelle zugeordneten Antriebsritzel und mit einem Abtriebsrad, wobei die genannten Elemente zusammen eine Vormontage-Einheit bilden, welche auf der Kurbelwelle lediglich in Radialrichtung derselben wirkend gelagert ist, während die Positionierung in Kurbelwellen-Achsrichtung über die in zumindest einer der Schienen geführte Kette erfolgt. Zum bekannten Stand der Technik wird auf die nicht vorveröffentlichte deutsche Patentanmeldung 196 31 875 verwiesen.

Diese vorbeschriebene Kettentrieb-Einheit nach dem Oberbegriff des Anspruchs 1 in vorteilhafter Weise weiterzubilden, ist Aufgabe der vorliegenden Erfindung.
Die Lösung dieser Aufgabe ist gekennzeichnet durch einen integrierten, am Leertrum der Kette anliegenden Spannhebel. Vorteilhafte Aus- und Weiterbildungen sind Inhalt der Unteransprüche.

Im folgenden wird die Erfindung anhand bevorzugter Ausführungsbeispiele näher erläutert. Dabei zeigt
- Fig. 1a: die teilweise aufgebrochene Vorder-Ansicht einer ersten Ausführungsform,
- Fig. 1b: eine Seitenansicht,
- Fig. 1c: die Rück-Ansicht und
- Fig. 1d: den Schnitt A-A aus Fig. 1a. In
- Fig. 2: ist die Vorder-Ansicht einer weiteren Ausführungsform gezeigt.

Die in den Figuren gezeigte Kettentrieb-Einheit enthält neben einem Antriebsritzel 1 eine Kette 2, sowie zwei Schienen 3, 4 für das Zugtrum und für das Leertrum der Kette 2, die weiterhin über zumindest ein Abtriebsrad 5 geführt ist. Diese beschriebene Kettentrieb-Einheit ist für den Antrieb eines nicht gezeigten Brennkraftmaschinen-Hilfsaggregates vorgesehen, wobei das Antriebsritzel 1 auf die Brennkraftmaschinen-Kurbelwelle, von welcher lediglich die Achse 6 dargestellt ist, gegen Verdrehen gesichert aufgesteckt ist. Über das Antriebsritzel 1, dessen Achse mit der Kurbelwellenachse 6 zusammenfällt, wird somit die Rotationsbewegung der Brennkraftmaschinen-Kurbelwelle auf die Kette 2 und von dieser auf das Abtriebsrad 5 übertragen, das auf einer Welle 23 des anzutreibenden Hilfsaggregates befestigt sein kann. Bei diesem Hilfsaggregat kann es sich beispielsweise um eine Ölpumpe handeln.

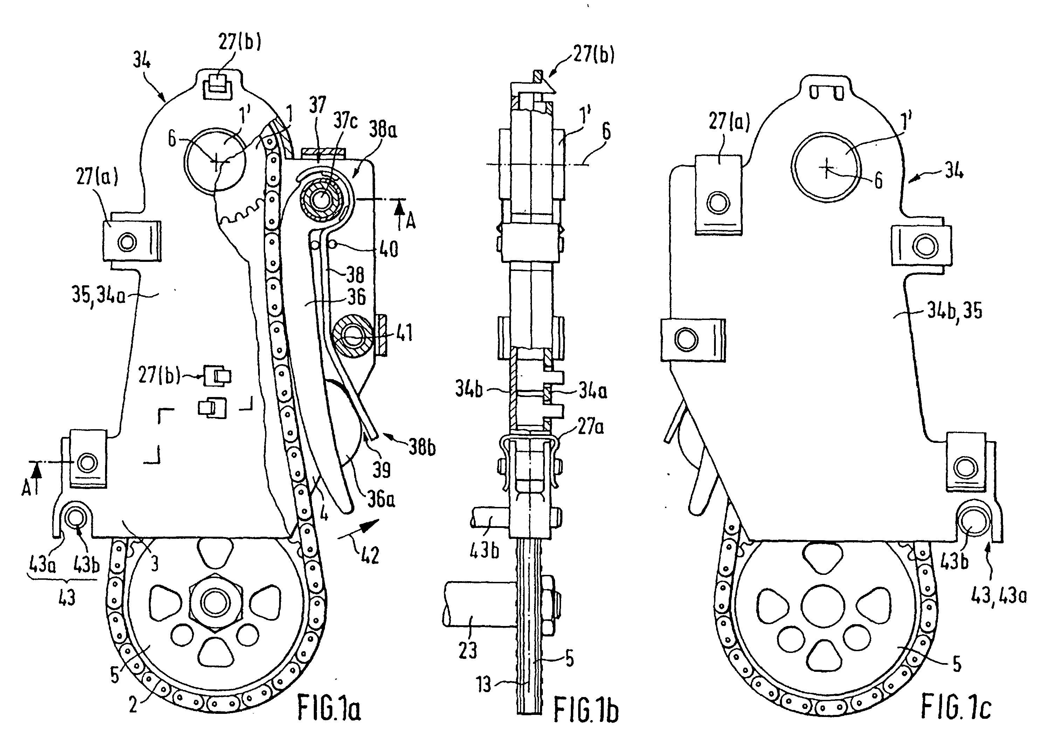

Die beiden Schienen 3, 4 der Kettentrieb-Einheit sind zu einer Baueinheit 34 zusammengefaßt, wobei stirnseitig vorgesehene Wände 35 die beiden zumindest abschnittsweise im wesentlichen U-förmig ausgebildeten Schienen 3, 4 miteinander verbinden. Wie insbesondere Fig. 1d zeigt, sind diese Schienen 3, 4 derart gestaltet, daß die darin geführte Kette 2 die Baueinheit 34 in Kurbelwellen-Achsrichtung 6 positionieren kann. In Radialrichtung der Kurbelwelle hingegen ist die Baueinheit 34 indirekt auf einem nicht gezeigten Wellenstumpf der ebenso nicht gezeigten Kurbelwelle gelagert, und zwar über das auf den Kurbelwellenstumpf aufgesteckte Antriebsritzel 1, welches mit seinen seitlichen Bunden 1' die beiden stirnseitigen Wände 35 der Baueinheit 34 durchdringt. Im übrigen wird bezüglich der Lagerung der hier beschriebenen Kettentrieb-Einheit ausdrücklich auf die eingangs bereits genannte deutsche Patentanmeldung 196 31 875 verwiesen.

Ein wesentliches Merkmal der vorliegenden Erfindung ist der mit der Bezugsziffer 36 bezeichnete Spannhebel, der mit seiner inneren Längskante über einen längeren Abschnitt der Kette 2 an der Außenseite dieser Kette 2 zum Anliegen kommt. Dieser Spannhebel 36 wirkt somit als Kettenspanner für das Leertrum der Kette 2. Wie ersichtlich ist der Spannhebel 36 an seinem einen Ende um einen sog. Lagerbereich 37 schwenkbar aufgehängt, wobei die Schwenkbewegung um eine zu den stirnseitigen Wänden 35 senkrechte Achse erfolgen kann und der Lagerbereich 37 - wie die Fig. 1a, 1d zeigen - zwischen den beiden Wänden 35 vorgesehen ist.

Zur Erläuterung dieses Lagerbereichs 37 wird zunächst auf den Aufbau der Baueinheit 34 eingegangen. Wie Fig. 1d zeigt, ist die Baueinheit 34 in der Symmetrie-Ebene 13 des Kettentriebes geteilt ausgebildet und wird durch mehrere Clipsverbindungen 27 zusammengehalten. Das in Fig. 1a vordere Teil 34a der Baueinheit 34 besteht somit u. a. aus der vorderen Wand 35 sowie jeweils einem halben U-Profil der beiden Schienen 3 und 4, während das hintere Teil 34b der Baueinheit 34 diese beiden Schienen 3 und 4 zu einem vollständigen U-Profil ergänzt und weiterhin die hintere Wand 35 der Baueinheit 34 enthält. In diesem Zusammenhang sei noch darauf hingewiesen, daß, nachdem die Schiene 3 das Zugtrum der Kette 2 führt, während im Bereich der das Leertrum der Kette 2 führenden Schiene 4 der Spannhebel 36 vorgesehen ist, es sich bei. der Schiene 3 um die sog. Führungsschiene des Kettentriebes handelt.

Was nun den Lagerbereich 37 betrifft, so erkennt man in Fig. 1d, daß eine Lagerbüchse 37a auf den einander gegenüberliegenden, von den Wänden 35 nach innen abragenden Lagerstegen 37b des vorderen Teiles 34a sowie des hinteren Teiles 34b angeordnet ist. Auf der Lagerbüchse 37a ist dann der Spannhebel 36 mit seinem kreisförmigen, nicht bezeichneten Lagerauge um die Achse 37c des Lagerbereichs 37 verschwenkbar gelagert. Längs dieser Achse 37c verläuft im übrigen ein Zentrierstift 35a, der an die Innenseite der Wand 35 des vorderen Teiles 34a angeformt ist und in eine entsprechende Durchtrittsöffnung in der Wand 35 des hinteren Teiles 34b eingreift. Ein vergleichbarer Zentrierstift 35a findet sich in Fig. 1d auch im linksseitigen Bereich der Baueinheit 34, welche im übrigen insbesondere aus Kunststoff-Spritzgußteil ausgebildet sein kann.

Unter anderem im Bereich dieser Zentrierstifte 35a sind Clipsverbindungen 27 vorgesehen, und zwar hier in Form sog. Federklammern 27a, die die Baueinheit 34 außenseitig umgreifen und ebenfalls durch die entsprechend geformten Zentrierstifte 35a geführt sind. Eine andere Clipsverbindung 27 befindet sich etwa in der Mitte der Wand 35 der Baueinheit 34, wo - wie insbesondere Fig. 1d zeigt - an die Innenseite der Wand 35 des vorderen Teiles 34a Kunststoffclips 27b angeformt sind, die in eine entsprechende Aussparung in der hinteren Wand 35 eingreifen. Ein. solcher Kunststoffclips 27b findet sich im übrigen auch am oberen Ende der Baueinheit 34 (vgl. Fig. 1a, 1b).

Zurückkommend zum Spannhebel 36 ist selbstverständlich ein geeignetes Federelement 38 erforderlich, welches den Spannhebel 36 mit der gewünschten Anpreßkraft gegen die Kette 2 drückt, um die gewünschte Kettenspannung zu erzielen. Dieses Federelement 38 ist in beiden gezeigten Ausführungsbeispielen biegestabartig ausgebildet und mit seinem ersten Ende 38a in der Nähe des Lagerbereiches 37 gelagert, während es mit seinem zweiten, freien Ende 38b in einem sog. Abstützpunkt 39 am Spannhebel 36 anliegt. An diesem Spannhebel 36 ist im Bereich des Abstützpunktes 39 im übrigen ein Vorsprung 36a angeformt, um einen definierten Abstützpunkt 39 zu erzielen.

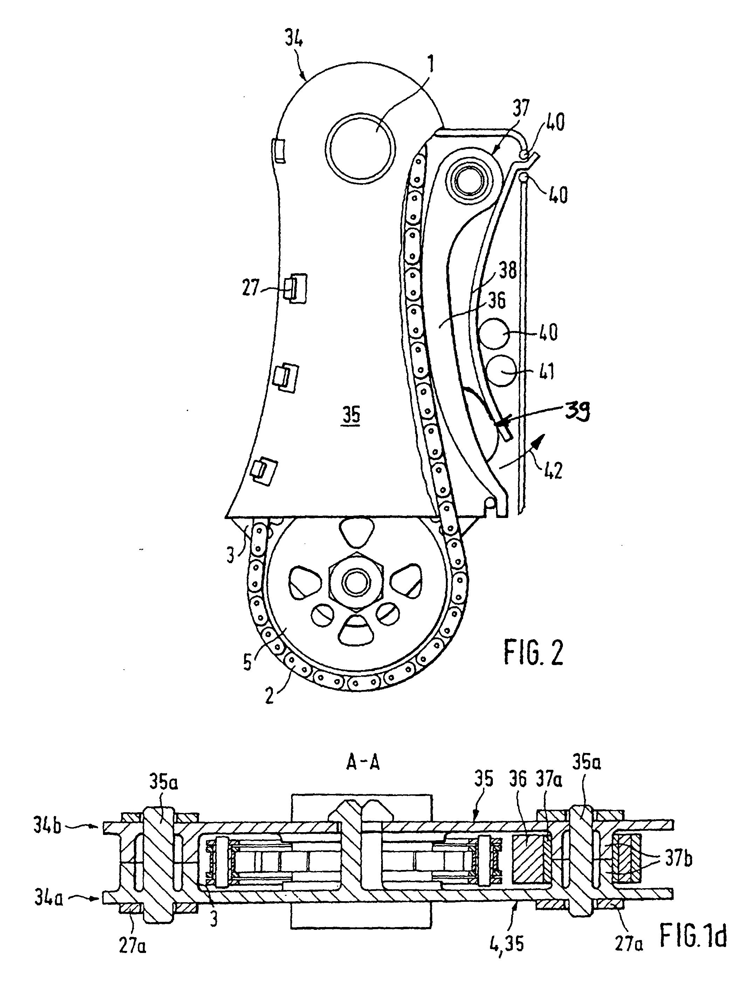

Beim Ausführungsbeispiel nach den Fig. 1a bis 1d ist das Federelement 38 direkt im Lagerbereich 37 des Spannhebels 36 gelagert, und zwar konzentrisch zu diesem. Wie ersichtlich umgreift das Federelement 38 mit seinem ersten Ende 38a den in diesem Bereich kreiszylindrisch geformten Spannhebel 36 außenseitig. Ferner ist bei diesem ersten Ausführungsbeispiel das Federelement 38 in der Nähe dieses Lagerbereiches 37 zwischen zwei Anschlagstiften 40 geführt.
Beim Ausführungsbeispiel nach Fig. 2 ist das Federelement 38 andersartig gelagert, und zwar ist hier das erste Ende 38a zwischen den beiden oberen gegenüber Fig.1 anders angeordneten Anschlagstiften 40 eingespannt und liegt danach mit einem in der Nähe des ersten Endes 38a liegenden Abschnitt an der Außenseite des Spannhebels 36 an, und zwar in der Nähe von dessen Lagerbereich 37, und ferner an einem weitere unterhalb davon liegenden Anschlagstift 40.
Mit den beiden gezeigten Lagerungsgestaltungen für das Federelement 38 lassen sich die gleichen Effekte erzielen, nämlich zum einen eine einfache Ausbildung der Lagerung einerseits, und zum anderen eine gewünschte Bewegungsdämpfung für den Spannhebel 36. Indem nämlich das Federelement 38 den Spannhebel 36 in dessen Lagerbereich 37 umgreift, (wie in Fig. 1a gezeigt), oder indem das Federelement 38 zumindest am Spannhebel 36 in der Nähe des Lagerbereiches 37 außenseitig anliegt (wie in Fig. 2 gezeigt), wird eine Schwenkbewegung des Spannhebels 36 um die Achse 37c durch das Federelement 38 gedämpft. Bezüglich des Spannhebels 36 wirkt das Federelement 38 somit zusätzlich als Reibungsdämpfer.

Zwischen dem nicht näher bezeichneten Lagerbereich des Federelementes 38, d. h. zwischen dem ersten Ende 38a desselben und dem Abstützpunkt 39 ist zumindest ein weiterer Anschlagpunkt 41 für das Federelement 38 vorgesehen. Dieser zumindest eine weitere Anschlagpunkt 41 befindet sich bezüglich des biegestabartig ausgebildeten Federelementes 38 auf der dem Spannhebel 36 abgewandten Seite. Mit Hilfe dieses Anschlagpunktes 41 läßt sich eine gestufte Federcharakteristik erzielen.
Bei einer geringen Auslenkung des Spannhebels 36 ist nämlich zunächst ein relativ langer Abschnitt des biegestabartigen Federelementes 38 relevant, und zwar im wesentlichen der zwischen dem Abstützpunkt 39 sowie dem Lagerbereich des Federelementes 38 liegende Abschnitt. Dadurch kann somit eine relativ weiche Federcharakteristik erzielt werden.
Wird hingegen der Spannhebel 36 durch die Schwingungsbewegungen der Kette 2 weiter gemäß Pfeilrichtung 42 ausgelenkt, so kommt das Federelement 38 am nahe des Abstützpunktes 39 liegenden Anschlagpunkt 41 zum Anliegen. Als Hebelarm bezüglich der Federwirkung des Federelementes 38 wirkt nunmehr lediglich der zwischen dem Abstützpunkt 39 und dem Anschlagpunkt 41 liegende kurze Abschnitt des Federelementes 38. Dies hat aber eine relativ steife Federcharakteristik zur Folge.
Durch geeignete Anordnung des oder der Anschlagpunkte 41 im Hinblick auf den Abstützpunkt 39 sowie auf den Lagerbereich des Federelementes 38 läßt sich somit eine optimale im Hinblick auf die gewünschte Spannung der Kette 2 ausgelegte Federkennlinie des Federelementes 38 erzielen.

Mit der Bezugsziffer 43 ist allgemein eine Befestigung zum Verhindern des Verschwenkens der Baueinheit 34 bezeichnet. Wie eingangs erläutert, ist die Baueinheit 34 im wesentlichen nur durch die Kette 2 geführt, nachdem nur das Antriebsritzel 1 sowie das Abtriebsrad 5 mit der Brennkraftmaschine verbunden sind. Wie bereits erwähnt, befindet sich das Antriebsritzel 1 auf der nicht gezeigten Kurbelwelle, während das Abtriebsrad 5 auf einer Welle 23 des nicht gezeigten Hilfsaggregates, welches ebenfalls an der Brennkraftmaschine befestigt ist, angeflanscht ist. Insbesondere in Richtung der Kurbelwellenachse 6 ist die Baueinheit 34 jedoch nicht mit der Brennkraftmaschine verbunden, sondern wird durch die auf dem Antriebsritzel 1 sowie dem Abtriebsrad 5 geführte Kette 2 positioniert bzw. geführt. Ohne die im folgenden kurz beschriebene Befestigung kann die gezeigte Baueinheit 34 somit in bzw. gegen Pfeilrichtung 42 um die Kurbelwellenachse 6 geringfügige Schwingbewegungen ausführen, nachdem diese gezeigte Baueinheit 34 nicht irgendwie mit dem Abtriebsrad 5 oder mit der Welle 23 des Hilfsaggregates verbunden ist.
Es sei ausdrücklich darauf hingewiesen, daß in gewissen Fällen derartige Schwingbewegungen der Baueinheit 34 überhaupt nicht störend sein müssen. In diesen Fällen ist die nunmehr beschriebene Befestigung 43 überhaupt nicht erforderlich.
Sind derartige geringe Schwingbewegungen, der Baueinheit 34 jedoch unerwünscht, so beispielsweise um tatsächlich eine definierte Kettenspannung durch den Spannhebel 36 einstellen zu können, so kann die Befestigung 43 vorgesehen sein, welches das beschriebene Verschwenken der Baueinheit 34 in bzw. gegen Pfeilrichtung 42 verhindert.

Diese Befestigung 43 besteht dabei aus einer in den stirnseitigen Wänden 35 der Baueinheit 34 vorgesehenen Aussparung 43a, in welche ein an einer geeigneten Stelle der Brennkraftmaschine befestigter, sich in Längsrichtung der Kurbelwellenachse 6 erstreckender Stift 43b eingreift.
Alternativ (nicht gezeigt) kann die Befestigung 43 jedoch auch derart ausgebildet sein, daß diese Baueinheit 34 im Bereich des Abtriebsrades 35 ähnlich ausgebildet ist wie im Bereich des Antriebsritzels 1, so daß also ein Verschwenken der Baueinheit 34 entweder durch das Abtriebsrad 5 oder auch durch die diesen zugeordnete Welle 23 verhindert wird.
Wie bereits erwähnt kann alternativ aber auch überhaupt keine derartige Befestigung 43 zum Verhindern des Schwenkens vorgesehen sein.

Das Ausführungsbeispiel gemäß Fig. 2 unterscheidet sich von demjenigen nach den Fig. 1a bis 1d auch durch die Lage und Anordnung der Clipsverbindungen 27. Wie ersichtlich sind diese nämlich im Randbereich der Wände 35 der Baueinheit 34 vorgesehen. Selbstverständlich sind daneben eine Vielzahl weiterer Abwandlungen von den beschriebenen Ausführungsbeispielen möglich, ohne den Inhalt der Patentansprüche zu verlassen. So kann die Baueinheit 34 auch nicht teilbar ausgebildet sein, d. h. als quasi geschlossenes Bauteil hergestellt werden, wobei dann jedoch in einer der stirnseitigen Wände 35 eine geeignete Aussparung zum Einführen des Antriebsritzels 1 vorgesehen sein muß. Im übrigen kann diese gesamte Kettentrieb-Einheit, bestehend aus der Baueinheit 34, dem Antriebsritzel 1, dem Abtriebsrad 5, der Kette 2, sowie dem Spannhebel 36 mit dem Federelement 38 als Vormontageeinheit ausgebildet in einen Kettenschacht einer Brennkraftmaschine eingesetzt werden, wie dies für eine vereinfachte Ausführungsform bereits in der eingangs genannten deutschen Patentanmeldung 196 31 875 beschrieben ist. Ferner können für die Schmierung und Kühlung der Kette 2 in der Baueinheit 34 geeignete Durchbrüche oder Öffnungen (nicht gezeigt) vorgesehen sein, über die in der Brennkraftmaschine umgewälztes Schmieröl, insbesondere das vom Zylinderkopf in die Ölwanne zurücklaufende Schmieröl in die Baueinheit 34 gelangt und so nicht nur die Kette 2, sondern auch die beweglichen Bauelemente der Baueinheit 34 erreicht.

### Bezugszeichenliste:

- 1: Antriebsritzel
- 1': seitlicher Bund von 1
- 2: Kette
- 3: Schiene (Führungsschiene)
- 4: Schiene
- 5: Abtriebsrad
- 6: Kurbelwellen-Achse

- 13: Symmentrieebene des Kettentriebes
- 23: Welle des Hilfsaggregates

- 27: Clipsverbindung
- 27a: Federklammer
- 27b: Kunststoffclips

- 34: Baueinheit
- 34a: vorderes Teil von 34
- 34b: hinteres Teil von 34
- 35: stirnseitige Wand von 34
- 35a: Zentrierstift

- 36: Spannhebel
- 36a: Vorsprung

- 37: Lagerbereich
- 37a: Lagerbüchse
- 37b: Lagerstege
- 37c: Achse

- 38: Federelement
- 38a: erstes Ende von 38
- 38b: zweites, freies Ende von 38

- 39: Abstützpunkt
- 40: Anschlagstift
- 41: Anschlagpunkt für 38
- 42: Pfeilrichtung

- 43: Befestigung zum Verhindern des Verschwenkens
- 43a: Aussparung
- 43b: Stift

## Patentansprüche

1. Kettentrieb-Einheit für den Antrieb eines Brennkraftmaschinen-Hilfsaggregates, mit einer Kette (2), mit zwei zu einer Baueinheit (34) zusammengefassten Schienen (3, 4) für deren Zugtrum und Leertrum, mit einem der Brennkraftmaschinen-Kurbelwelle zugeordneten Antriebsritzel (1), und mit einem Abtriebsrad (5), wobei die genannten Elemente zusammen eine Vormontage-Einheit bilden, welche auf der Kurbelwelle lediglich in deren Radialrichtung wirkend gelagert ist, während die Positionierung in Kurbelwellen-Achsrichtung (6) über die in zumindest einer der Schienen (3) geführte Kette (2) erfolgt, und einen integrierten, am Leertrum der Kette (2) anliegenden, drehbar gelagerten Spannhebel (36), **dadurch gekennzeichnet, dass** der sich an einem biegestabartig ausgebildeten, in der Baueinheit (34) gelagerten Federelement (38) abstützt, und
die Auflagefläche des Federelements (38) auf dem Lagerbereich (37) ein zusätzlicher Reibungsdämpfer ist.

2. Kettentrieb-Einheit nach Anspruch 1,
**dadurch gekennzeichnet, daß** das Federelement (38) konzentrisch zum Spannhebel (36) gelagert ist, diesen im Lagerbereich (37) außenseitig umgreift, und in der Nähe des Lagerbereiches (37) zwischen zwei Anschlagstiften (40) geführt ist.

3. Kettentrieb-Einheit nach einem der vorangegangenen Patentansprüche ,
**dadurch gekennzeichnet, daß** zwischen dem Lagerbereich des Federelementes (38) sowie dem Abstützpunkt (39) des Spannhebels (36) am Federelement (38) zumindest ein Anschlagpunkt (41) für das Federelement (38) vorgesehen ist.

4. Kettentrieb-Einheit nach einem der vorangegangenen Patentansprüche,
**gekennzeichnet durch** eine an der Baueinheit (34) vorgesehene Befestigung (43) zum Verhindern des Verschwenkens um die dem Antriebsritzel (1) zugeordnete Kurbelwellenachse (6).

5. Kettentrieb-Einheit nach einem der vorangegangenen Patentansprüche,
**dadurch gekennzeichnet, daß** die Baueinheit (34) in der Symmetrie-Ebene (13) des Kettentriebes oder in einer hierzu parallelen Ebene geteilt ausgebildet und durch Clipsverbindungen (27) zusammengehalten ist.

6. Kettentrieb-Einheit nach einem der vorangegangenen Patentansprüche,
**dadurch gekennzeichnet, daß** die Kettentrieb-Einheit in einen Kettenschacht der Brennkraftmaschine einsetzbar ist.

## Claims

1. A chain drive unit for driving an auxiliary unit of an internal combustion engine, comprising a chain (2), two rails (3, 4) for the pulling strand and the return strand combined in a structural unit (34), a drive pinion (1) associated with the engine crankshaft and a driven wheel (5), the said elements together forming a pre-assembled unit which is mounted on the crankshaft so as to be operative only in the radial direction thereof, whereas positioning in the axial direction (6) of the crankshaft is effected via the chain (2) guided in at least one of the rails (3), and via an incorporated tension lever (36) rotatably mounted and adjoining the return strand of the chain (2),
**characterised in that** the [lever] abuts a spring element (38) in the form of a bending rod mounted in the structural unit (34) and the surface of the spring element (38) resting on the bearing region (37) is an additional friction absorber.

2. A chain drive unit according to claim 1,
**characterised in that** the spring element (38) is mounted concentrically with the tension lever (36), surrounds it on the outside in the bearing region (37), and is guided between two stop pins (40) near the bearing region (37).

3. A chain drive unit according to any of the preceding claims,
**characterised in that** at least one stop point (41) for the spring element (38) is provided between the bearing region of the spring element (38) and the stay point (39) of the tension lever (36) on the spring element (38).

4. A chain drive unit according to any of the preceding claims,
**characterised by** a fastener (43) provided on the structural unit (34) for prevention of pivoting around the crankshaft axis (6) associated with the drive pinion (1).

5. A chain drive unit according to any of the preceding claims,
**characterised in that** the structural unit (34) is divided in the plane of symmetry (13) of the chain drive or in a plane parallel thereto and is held together by clip connections (27).

6. A chain drive unit according to any of the preceding claims,
**characterised in that** the chain drive unit is insertable into a chain pit in the engine.

## Revendications

1. Module d'entraînement à chaîne pour l'entraînement d'un accessoire de moteur à combustion interne comprenant une chaîne (2), deux rails (3, 4) regroupés en un ensemble (34) pour guider le brin de traction et le brin de retour, un pignon d'entraînement (1) associé au vilebrequin du moteur à combustion interne et une roue de sortie (5), les éléments constituant un module préassemblé monté sur le vilebrequin de manière active uniquement dans la direction radiale alors que le positionnement dans la direction axiale (6) du vilebrequin se fait par au moins une chaîne (2) guidée par des rails (3), ainsi qu'un levier tendeur (36) intégré, monté à rotation, et appliqué contre le brin de retour de la chaîne (2),
**caractérisé en ce que**
le levier tendeur s'appuie contre un élément de ressort (38) en forme de tige flexible, monté dans l'unité (34) ; et
la surface d'appui de l'élément de ressort (38) sur la zone de palier (37) est un amortisseur de friction, supplémentaire.

2. Module d'entraînement à chaîne selon la revendication 1,
**caractérisé en ce que**
l'élément de ressort (38) est monté concentriquement au levier tendeur (36) en entourant celui-ci du côté extérieur dans la zone de palier (37) et à proximité de la zone de palier (37), il est guidé entre deux broches formant buté (40).

3. Module d'entraînement à chaîne selon l'une des revendications précédentes,
**caractérisé par**
un point de butée (41) pour l'élément de ressort (38) entre la zone de palier de l'élément de ressort (38) et le point d'appui (39) du levier tendeur (36) sur l'élément de ressort (38).

4. Module d'entraînement à chaîne selon l'une des revendications précédentes,
**caractérisé par**
un moyen de fixation (43) prévu sur l'unité (34) pour éviter le basculement autour de l'axe (6) du vilebrequin associé au pignon d'entraînement (1).

5. Module d'entraînement à chaîne selon l'une des revendications précédentes,
**caractérisé en ce que**
l'ensemble (34) est divisé dans le plan de symétrie (13) de l'entraînement à chaîne ou dans un plan parallèle à celui-ci et est maintenu assemblé par des liaisons enclipsées (27).

6. Module d'entraînement à chaîne selon l'une quelconque des revendications précédentes,
**caractérisé en ce que**
l'unité d'entraînement à chaîne est logée dans un puits à chaîne du moteur à combustion interne.
